# EUROPÄISCHE PATENTSCHRIFT

(11) **EP 1 491 317 B1**
(45) Veröffentlichungstag und Bekanntmachung des Hinweises auf die Patenterteilung: **15.10.2008**
(21) Anmeldenummer: 04012488.5
(22) Anmeldetag: 26.05.2004
(51) Int. Cl.: B29C 45/16, B65D 25/20

(54) **Verfahren zum Herstellen eines Behälters mit einem Datenträger und Behälter mit einem Datenträger**
Method for producing a container with a data carrier and container with a data carrier
Procédé pour produire un conteneur avec un support des données et conteneur avec un support des données

(30) Priorität: 26.06.2003 DE 10328836
(43) Veröffentlichungstag der Anmeldung: 29.12.2004
(73) Patentinhaber: Schoeller Arca Systems GmbH, 82049 Pullach (DE)
(72) Erfinder: Steenbergen, Johannes Femminus, 7731 KH Ommen (NL)
(74) Vertreter: Bockhorni & Kollegen

(56) Entgegenhaltungen:
- EP-A- 0 619 246
- EP-A- 0 994 041
- EP-A- 1 115 087
- DE-U- 20 319 100
- FR-A- 1 451 327
- US-A- 5 326 939

## Beschreibung

Die Erfindung bezieht sich auf ein Verfahren zum Herstellen eines Behälters mit einem Datenträger, auch Transponder (für "transmitter-responder") genannt, mit den Merkmalen des Oberbegriffs des Patentanspruchs 1. Die Erfindung bezieht sich auch auf einen Behälter mit einem Datenträger, der insbesondere mit dem erfindungsgemäßen Verfahren herstellbar ist. Das Verfolgen und Auffinden von als Massenprodukte aus Kunststoffen gespritzten Flaschen-, Obst- und/oder Materialkästen, hier zusammenfassend als Behälter bezeichnet, sowie das Identifizieren ihrer Inhalte im Fluss der Logistik ist von ständigem und wachsendem Interesse. Besondere Aufmerksamkeit findet bei den Eigentümern solcher Verpackungsprodukte die Möglichkeit, einen versteckten (unsichtbaren) Transponder in einen solchen Behälter zu integrieren. Mit einem solchen Datenträger, auch RFID-Transponder genannt (RFID = durch Radiofrequenz, also über elektromagnetische Wellen, identifizierbar), ist es möglich, in einem Raum mithilfe einer entsprechenden Sender/Empfänger-Einheit einen bestimmten Behälter automatisch und ohne direkten Blickkontakt aufzufinden, seine Füllung zu identifizieren. Mit einem (Ortungs-)System aus geeigneten Sendem/Empfängern kann man Aufenthaltsorte und Transportwege verfolgen. Solche Systeme ermöglichen insbesondere in großen Umschlagplätzen das automatische Sortieren und Verteilen der Transportströme.

Transponder-Datenträger können als Nur-Lesen-Speicher (ROM) ausgeführt sein, wobei die Daten des Behälters (z.B. Hersteller, Eigentümer, Produktionsdatum, Material) einmal auf elektronischem Wege eingespeichert werden und nicht mehr verändert, allenfalls gelöscht werden können. Es gibt jedoch auch Transponder mit elektronisch programmierbaren oder adressierbaren Speichern, in denen mithilfe geeigneter Sender immer neue Daten abgelegt werden können. Solche Daten können z. B. den jeweiligen Inhalt, den Bestimmungsort, ein Verfall- oder Rückgabedatum betreffen. Auch als Diebstahlsicherungen sind Transponder verwendbar. In der Regel sind es rein passive Elemente, die keine eigene Energiequelle benötigen, sondern zum Datenaustausch ggf. durch die zugeführte Strahlung aktivierbar sind.

Nähere Informationen zu RFID-Transpondern findet man unter:
http://www.aimglobal.org/technologies/rfid/ im Internet.

Vor dem Hintergrund unabsichtlicher oder auch absichtlicher mechanischer Manipulation oder Zerstörung der Datenträger stellt sich das Problem, diese möglichst unauffällig/geschützt, nach Möglichkeit unsichtbar in dem Behälter unterzubringen.

WO 93/24381 beschreibt ein Verfahren zum Ausstatten eines aus Kunststoff gespritzten Transportbehälters mit einem Transponder, bei dem letzterer zunächst in einem Gehäuse untergebracht wird und sodann mitsamt dem Gehäuse mit dem Material des Behälters umspritzt wird.

Im Vergleich zu den Preisen für die Behälter selbst sind die Preise für solche geschützten Transponder und deren Integration in die Kästen recht hoch. Dies ist ein Hindernis für die industrielle Umsetzung dieser an sich vorteilhaften Option.
Eine rein physisch sehr einfache und preiswerte Transponder-Bauform besteht aus einer auf ein Trägersubstrat (Folie) gedruckten Antenne, die in einem speziellen flachen und flexiblen Chip integriert sind (sogenanntes "Inlay"). Diese werden von spezialisierten Herstellern in großen Mengen gefertigt und zu geringen Preisen angeboten. Es wäre von Vorteil, diese einfache Datenträger-Bauform direkt, also ohne Gehäuse oder laminierte Schutzschichten oder - folien in einen Behälter der in Rede stehenden Art einsetzen zu können.

Problematisch ist hierbei jedoch die mangelnde Kompatibilität zwischen dem Material, aus dem die Behälter üblicherweise gespritzt werden (Polyolefine wie HDPE = hochdichtes Polyethylen oder PP = Polypropylen), und dem Polyester-Material der Inlays bzw. deren Trägerfolien. Diese Materialien lassen sich in einem Umspritzungsvorgang nicht dauerhaft adhäsiv miteinander verbinden. Da ferner das Polyolefin-Material der Behälter nach dem Spritzvorgang um etwa 1,8 % schrumpft, wogegen das Transponder-Inlay dieser Schrumpfung nicht folgt, entstehen im Bereich des umspritzten Transponders deutlich wahrnehmbare Ausbeulungen.

Das Dokument WO 01/00 493 Al beschreibt eine Lösung, bei der ein flacher (folienförmiger) Transponder zwischen dem eigentlichen Material des Behälters und einem Etikett angebracht wird, welches Etikett mit dem Behälter unlösbar verbunden ist. Der Transponder kann in einer Ausnehmung einer Wand des Behälters aufgenommen sein. In einer bevorzugten Ausführungsform wird der Transponder mit dem Etikett verbunden und als Ensemble in der Spritzform fixiert, bevor die Kunststoffmasse eingespritzt wird. Hierbei entsteht eine dauerhafte Verbindung zwischen dem Behältermaterial und der Einheit aus Transponder und Etikett.
Jedoch können auch mit diesem Verfahren sichtbare Verformungen aufgrund der unterschiedlichen Material-Schrumpfungen nach dem Spritzvorgang nicht völlig ausgeschlossen werden, denn auch hier tritt die Schrumpfung des größten Volumenanteils des Behälters nach dem Verbinden mit dem Datenträger ein.

Schließlich ist ein Müllbehälter mit einem Code-Sensor bekannt (US A-5326939), bei dem der Code-Sensor in einer Ausnehmung eines Klappdeckels eines Müllbehälters eingesetzt und dann mit einem Deckelelement nach außen hin verschlossen wird. Dieser Deckel wird durch Verschweißen, Verkleben, Bolzenbefestigung oder Nietbefestigung, aber auch durch schnapp-, rast- oder cliparigen Verschluss befestigt bzw. als Einlegeteil in einen Versteifungskragen oder einen Griff eingeformt.

Schließlich sind eingekapselte Transponder bekannt gemäß EP 1 115 087 A2, bei dem ein Transponder in zwei Kunststoffhälften eingekapselt bzw. vollständig ummantelt ist.

Der Erfindung liegt die Aufgabe zu Grunde, ein verbessertes Verfahren zum Ausstatten eines Behälters mit einem Datenträger oder Transponder anzugeben, sowie auch einen Behälter anzugeben, mit dem die vorstehend genannten Probleme vermieden werden.

Diese Aufgabe wird hinsichtlich des Verfahrens erfindungsgemäß mit den Merkmalen des Patentanspruchs 1 gelöst. Die Merkmale des Patentanspruchs 7 geben einen entsprechenden Behälter an. Die Merkmale der den unabhängigen Ansprüchen jeweils nachgeordneten Unteransprüche geben vorteilhafte Weiterbildungen der Erfindung an.

Erfindungsgemäß stellt man die endgültige Verbindung zwischen dem Behälter und dem tenträger erst nach dem Erstarren des Behältervolumens und dem Abschluss der materialbedingten Schrumpfung her ("post-mould-process"), wobei jedoch durch das nachfolgende Zufügen eines plastischen Deckmaterials als Versiegelung (Überformen, "overmoulding") immer eine vollständige und bei Bedarf äußerlich/optisch kaum wahrnehmbare Integration des Datenträgers in den Körper des Behälters erhalten bleibt. Dadurch wird der erforderliche zusätzliche Fertigungsschritt mehr als kompensiert. Ohnehin lässt sich das Verfahren einschließlich des Anbringens des Datenträgers vollständig mechanisieren. Hierbei wird der Behälter zunächst mit einer nischenartigen Ausnehmung gespritzt, die zum Aufnehmen oder Einbetten des Datenträgers vorgesehen ist. Es versteht sich, dass die Abmessungen der Ausnehmung (in Höhe, Breite und Tiefe) mindestens denjenigen des Datenträgers entsprechen sollten. Der Datenträger wird am Behälter fixiert, vorzugsweise mithilfe einer dünnen, mit dem Behälter-Material kompatiblen Kleberschicht vorläufig fixiert. Es wäre aber beispielsweise auch möglich, den Datenträger am Behälter rein mechanisch mithilfe angespritzter Formelemente (Ansätze, Haltestege) ohne Eintrag von Klebstoffen vorläufig zu sichern. Solche Formelemente ermöglichen als mechanische Lagecodierung darüber hinaus auch ein genaues Positionieren des Datenträgers am Behälter (das z. B. mithilfe eines Roboters erfolgen kann). Natürlich lassen sich mechanische und adhäsive Vorfixierung miteinander kombinieren, wenn dies von Vorteil erscheint. Das Deckmaterial kann zwar grundsätzlich ein anderes Material als das Behältermaterial sein, verschließt aber die Ausnehmung und ist flächenbündig mit der Behälterwandaußenfläche abschließend verbunden, wobei der durch das Deckmaterial überdeckte Datenträger optisch nicht sichtbar ist.

Ganz bevorzugt wird es erfindungsgemäß jedoch als "second shot" ebenfalls im Formspritzverfahren hinzugefügt. Hierzu wird eine weitere Einspritz-Einheit oder jedenfalls ein weiteres Formsegment (mit Spritzkanal) verwendet, die/das an den Behälter mit dem vorfixierten Datenträger angelegt werden kann, um sodann die gebildete Kavität mit dem Deckmaterial aufzufüllen. Dabei entsteht eine besonders innige Verbindung zwischen dem Behälter und dem Deckmaterial, und der Datenträger wird sicher und dauerhaft eingeschlossen. Besagte Kavität kann jede zweckmäßige Gestalt haben, die zum Ausformen des Deckmaterials benötigt wird, ob dieses nun eine glatte Fläche oder ein Relief bilden soll.

Es wäre denkbar, den vorgenannten Formwechsel mithilfe einer Wendeform zu rationalisieren und zu automatisieren, wobei lediglich dasjenige Segment der ursprünglichen Form entfernt wird, das den Bereich der Ausnehmung für den Transponder formte, und -nach dem Einsetzen und vorläufigen Fixieren des Transponders an der vorgesehenen Stelle- durch ein Formsegment ersetzt wird, das mit dem im Wesentlichen schon ausgeformten (und erstarrten) Behälter zusammen die für die Zufuhr des Deckmaterials erforderliche Kavität bildet.

Es ist auch möglich, den vorgefertigten und mit dem Datenträger bestückten Behälter nach dem Entformen in ein gesondertes Spezialwerkzeug einzulegen. Dieses kann mit einer Kühlfunktion versehen sein, und überdeckt in jedem Fall die Stelle des Behälters, an der der Datenträger angeordnet ist. Mithilfe dieses Werkzeugs wird dann das Deckmaterial in der gewünschen Form eingespritzt.

Natürlich wählt man für das Deckmaterial einen mit dem Behältermaterial kompatiblen Kunststoff, ganz bevorzugt dasselbe Material (ein Polyolefin wie HDPE oder PP).

Die Verbindung zwischen dem Deckmaterial und dem Behälter kann noch weiter verbessert werden, wenn der flach und flächig ausgebildete Datenträger/Transponder mindestens eine Durchbrechung oder Perforation hat, die das Deckmaterial durchdringen kann. Im Vergleich mit der Verwendung eines ganzflächigen Foliensubstrats wird damit der Vorteil erreicht, dass das Deckmaterial nicht nur rund um den Außenumfang des Datenträgers herum mit dem Behältermaterial in Kontakt kommt, sondern durch die Perforation hindurch auch mit mindestens einer Stelle des vom Transponder überdeckten Flächenbereichs.

Schließlich kann das Deckmaterial in bestimmten Anwendungsfällen eine andere Färbung als das Behältermaterial haben.

Weitere Einzelheiten und Vorteile des Gegenstands der Erfindung gehen aus der Zeichnung von Ausführungsbeispielen und deren sich im Folgenden anschließender eingehender Beschreibung hervor.

Es zeigen in vereinfachter, nicht maßstäblicher Darstellung
- Fig. 1: eine Schnittansicht eines Wandabschnitts eines Behälters nach dem Ausformen einer zum Aufnehmen eines Datenträgers vorgesehenen nischenförmigen Ausnehmung;
- Fig. 2: dieselbe Schnittansicht nach dem Einlegen und vorläufigen Fixieren eines flachen Datenträgers in der Ausnehmung;
- Fig. 3: die Schnittansicht nach Fig. 2 nach dem Auffüllen der Ausnehmung mit einem Deckmaterial;
- Fig. 4: eine Variante zur Fig. 3, bei der ein mit einer Perforation versehener Datenträger mit dem Deckmaterial überdeckt wurde und
- Fig. 5: eine weitere Variante, die Kein Teil der Erfindung ist, analog zu Fig. 4, in der das Deckmaterial sich reliefartig über die Wand des Behälters erhebt.

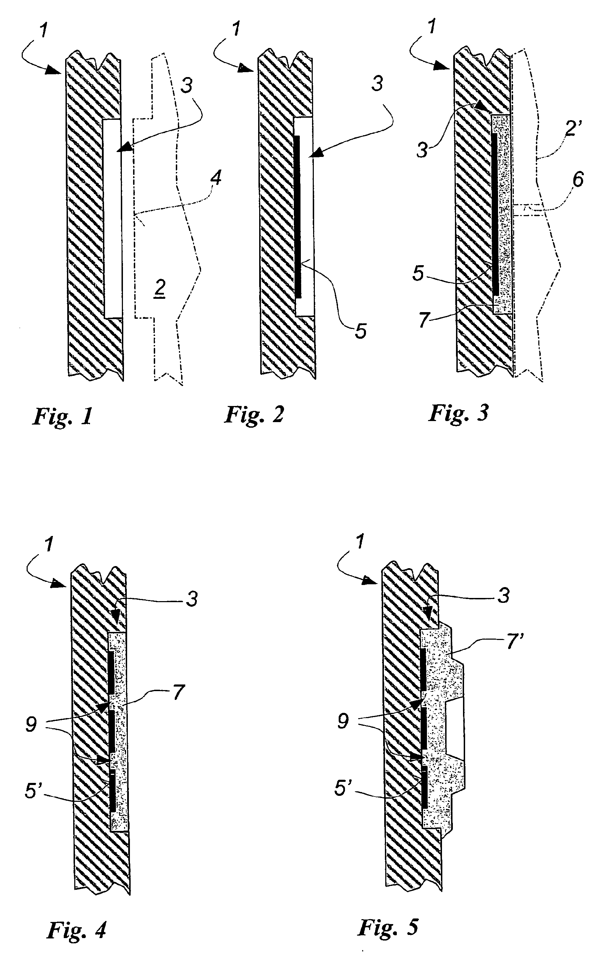

In **Fig. 1** erkennt man einen Abschnitt einer Wand 1 eines nicht weiter dargestellten Behälters, der durch Formspritzen einer Kunststoffmasse hergestellt ist. Hierbei kann es sich um einen Flaschenkasten, eine Obststeige, einen Behälter für Kleinmaterial oder Schüttgüter und dgl. mehr handeln. Die Verwendung, die Gestalt und die Einzelheiten des Behälters sind allerdings für die vorliegende Erfindung nebensächlich, so dass hier nicht weiter darauf einzugehen ist.

In eine Außenfläche der Wand 1 ist eine nischenartige Ausnehmung 3 eingeformt. Der Behälter wird mithilfe einer hier nur durch einen strichpunktierten Ausschnitt angedeuteten Spritzform 2 gespritzt. Im Bereich der Wand 1 hat deren Kavität eine der Ausnehmung 3 entsprechende positive Ausformung 4.

**Fig. 2** zeigt einen am Boden der Ausnehmung 3 angeordneten Datenträger 5 des eingangs beschriebenen Inlay-Typs. Es handelt sich vorzugsweise um einen mit einer Antenne und einem Speicherchip versehenen und auf einer flachen Trägerfolie angeordneten passiven RFID-Transponder eines marktgängigen Typs. Dieser Datenträger 5 wird nach dem Erstarren des Behälters und zumindest partiellem Öffnen der Spritzform 2, ggf. nach dem Entformen des Behälters, in die Ausnehmung 3 eingesetzt. In diesem Beispiel ist er mithilfe einer dünnen(hier nicht sichtbaren), Kleberschicht aus einem mit dem Behälter-Material kompatiblen Material vorläufig fixiert.

In **Fig. 3** ist die Ausnehmung 3 mit einem Deckmaterial 7 ausgefüllt. Letzteres wird vorzugsweise ebenfalls durch Formspritzen mit der Wand 1 des Behälters vereinigt. Hierzu bedient man sich z. B. einer (ebenfalls nur als Ausschnitt strichpunktiert angedeuteten) Spritzform 2', welche die Ausnehmung 3 nebst dem Datenträger 5 überdeckt. Mithilfe eines in diese Spritzform 2' eingeformten Spritzkanals 6 wird das Deckmaterial 7 in die Ausnehmung 3 eingespritzt. Hernach überdeckt es den Datenträger 5 derart, dass er von außen nicht sichtbar ist. Es versteht sich, dass die Spritzform 2' gegen die Behälterwand 1 hinreichend abgedichtet ist, um unerwünschtes Austreten des Deckmaterials 7 über den Rand der Ausnehmung 3 zu verhindern.

Zugleich ist das Gesamtvolumen des Deckmaterials 7 im Verhältnis zum Behälter derart gering, dass selbst bei der unvermeidlichen Schrumpfung dieses Volumens um etwa 1,8 % nach dem Formspritzen keine wesentlichen Formänderungen zu befürchten sind.

In einer Variante der physischen Ausführung eines Datenträgers 5' kann dessen Trägersubstrat gemäß **Fig. 4** mit einer oder mehreren Perforationen 9 versehen sein. Das Deckmaterial 7 kann diese Perforationen durchdringen. Es kann sich somit in dem vom Datenträger überdeckten Bereich zumindest punktuell direkt mit dem Boden der Ausnehmung 3 verbinden.

Hierdurch werden eine erhöhte Stabilität der Verbindung und eine noch bessere Sicherheit gegen das Entstehen unerwünschter Unebenheiten im Bereich des Deckmaterials 7 geschaffen.

Während die Fig. 3 und 4 einen flächenbündigen Abschluss des Deckmaterials 7 mit der angrenzenden Außenfläche der Wand 1 zeigen (es füllt also die Ausnehmung 3 gerade vollständig aus, ohne über deren Rand auszugreifen), ist in **Fig. 5** das Deckmaterial 7' als erhabenes Relief ausgeführt, und es ist auch geringfügig über den Rand der Ausnehmung 3 hinaus ausgeformt. Der Datenträger 5' und seine Festlegung in der Ausnehmung 3 werden hiervon nicht berührt. Jedoch bildet das Deckmaterial 7' in einer solchen Ausführung ein zusätzliches Gestaltungselement des Behälters, z. B. ein Hersteller- oder Eigentümer-Logo. Diese äußere Gestaltung des Deckmaterials ist mithilfe einer entsprechend ausgeformten Kavität einer gegenüber Fig. 3 modifizierten Spritzform sehr einfach herstellbar.

Natürlich kann das Deckmaterial 7 oder 7' dieselbe Farbe wie das Behältermaterial oder auch eine andere Farbe haben.

Es sei noch angemerkt, dass der Datenträger 5' mithilfe der in ihm ausgeführten Perforationen 9 auch auf ggf. in der Ausnehmung 3 angeformte Ansätze (hier nicht dargestellt) aufgesteckt werden könnte, um ihn so vorläufig rein mechanisch zu fixieren.

## Patentansprüche

1. Verfahren zum Herstellen eines Behälters durch Formspritzen einer Kunststoffmasse, der einen mit einer Wand (1) des Behälters verbundenen Datenträger (5; 5') umfasst, wobei zunächst der Behälter durch Formspritzen in einer Spritzform (2) hergestellt und sodann der Datenträger (5; 5') nach zumindest partiellem Öffnen der Spritzform (2) an der für ihn vorgesehenen Stelle (3) des Behälters angeordnet wird, wobei der Behälter zunächst mit einer nischenartigen Ausnehmung (3) an der Außenfläche einer Behälterwand (1) zur Aufnahme des Datenträgers (5; 5') gespritzt wird;
**dadurch gekennzeichnet, dass**
der Datenträger direkt, also gehäusefrei oder ohne laminierte Schutzschichten oder -folien, auf dem Boden der Ausnehmung (3) angeordnet und fixiert wird;
schließlich die Ausnehmung (3) vollständig durch einen zweiten Spritzvorgang mit einem an dem Behältermaterial haftenden Kunststoffdeckmaterial derart aufgefüllt wird, dass die Ausnehmung (3) durch das Deckmaterial (7; 7') verschlossen und der Datenträger (5; 5') mit dem Behälter dauerhaft verbunden wird, wobei das Deckmaterial flächenbündig mit der angrenzenden Außenfläche der Behälterwand (1) abschließend angebracht wird und den Datenträger überdeckt, so dass der Datenträger in dem Behälter optisch nicht sichtbar ist.

2. Verfahren nach Anspruch 1, bei dem der Datenträger (5; 5') ein Transponder ist.

3. Verfahren nach Anspruch 2, bei dem das Deckmaterial mithilfe einer gesonderten Spritzvorrichtung (2') hinzugefügt wird, in die der Behälter eingelegt oder die an den Behälter angelegt wird.

4. Verfahren nach einem der vorstehenden Ansprüche, bei dem ein Datenträger (5') mit mindestens einer vom Deckmaterial (7; 7') durchdringbaren Perforation (9) verwendet wird.

5. Verfahren nach einem der vorstehenden Ansprüche, bei dem der Datenträger (5; 5') vor dem Zufügen des Deckmaterials (7; 7') durch Kleben vorläufig an der Wand (1) des Behälters fixiert wird.

6. Verfahren nach einem der vorstehenden Ansprüche, bei dem der Datenträger (5; 5') vor dem Zufügen des Deckmaterials (7; 7')mithilfe von angespritzten Formelementen vorläufig an der Wand (1) des Behälters positioniert und/oder fixiert wird.

7. Behälter aus formgespritztem Kunststoff mit einem Datenträger, der zwischen dem Behältermaterial und einem Deckmaterial angeordnet ist,
**dadurch gekennzeichnet, dass**
das Deckmaterial durch Formspritzen in eine nischenartige Ausnehmung (3) an der Außenfläche der Behälterwand (1) zugefügt ist und an dem Behältermaterial haftet, wobei der Datenträger direkt, also gehäusefrei oder ohne laminierte Schutzschichten oder folien auf dem Boden der Ausnehmung (3) angeordnet ist, und dass die Ausnehmung durch das Deckmaterial (7) vollständig ausgefüllt und die Ausnehmung durch das Deckmaterial (7) verschlossen ist, so dass der Datenträger dauerhaft mit dem Behälter verbunden ist, wobei das Deckmaterial (7) flächenbündig mit der angrenzenden Außenfläche der Behälterwand (1) abschließend ausgebildet und den Datenträger überdeckend angebracht ist, und dass der Datenträger in dem Behälter optisch nicht sichtbar ist.

8. Behälter nach Anspruch 7,
**dadurch gekennzeichnet, dass**
der Datenträger ein RFID-Transponder in Folienform ist.

9. Behälter nach einem der Ansprüche 7 oder 8,
**dadurch gekennzeichnet, dass**
das Deckmaterial (7; 7') das gleiche Material wie das Material des Behälters ist.

10. Behälter nach einem der Ansprüche 7 bis 9,
**dadurch gekennzeichnet, dass**
das Deckmaterial (7) glatt mit einer Wand des Behälters abschließt.

11. Behälter nach einem der Ansprüche 7 bis 10,
**dadurch gekennzeichnet, dass**
das Deckmaterial (7; 7') durch Formspritzen mithilfe eines Spritzwerkzeugs (2') an den Behälter angeformt ist.

12. Behälter nach einem der Ansprüche 7 bis 11,
**dadurch gekennzeichnet, dass**
der Kunststoff ein Polyolefin ist.

13. Behälter nach einem der Ansprüche 7 bis 12,
**dadurch gekennzeichnet, dass**
der Datenträger (5') mit mindestens einer vom Deckmaterial (7; 7') durchdringbaren Perforation (9) versehen ist.

## Claims

1. A method of manufacturing a container by injection moulding a plastic composition, which includes a data carrier (5; 5') connected to a wall (1) of the container, wherein the container is firstly produced by injection moulding in an injection mould (2) and the data carrier (5; 5') is then arranged at the position provided for it after at least partially opening the injection mould (2), wherein the container is firstly moulded with a chamber-like recess (3) in the outer surface of a container wall (1) for receiving the data carrier (5; 5'), **characterised in that** the data carrier is arranged and fixed directly, that is to say without a housing or without laminated protective layers or films, on the base of the recess (3); the recess (3) is finally completely filled by a second injection process with a plastic cover material adhering to the container material such that the recess (3) is sealed by the cover material (7; 7') and the data carrier (5; 5') is permanently connected to the container, wherein the cover material is then applied flush with the adjacent outer surface of the container wall (1) and covers the data carrier so that the data carrier is optically not visible in the container.

2. A method as claimed in Claim 1, in which the data carrier (5; 5') is a transponder.

3. A method as claimed in Claim 2, in which the cover material is added with the aid of a separate injection device (2'), into which the container is inserted or which is applied to the container.

4. A method as claimed in one of the preceding claims, in which a data carrier (5') is used with at least one perforation (9), through which cover material (7; 7') may penetrate.

5. A method as claimed in one of the preceding claims, in which the data carrier (5; 5') is temporarily fixed to the wall (1) of the container by adhesive before the addition of the cover material (7; 7').

6. A method as claimed in one of the preceding claims, in which the data carrier (5; 5') is temporarily positioned and/or fixed on the wall (1) of the container with the aid of integrally moulded shaped elements before the addition of the cover material (7; 7').

7. A container of injection moulded plastic material with a data carrier, which is arranged between the container material and a cover material, **characterised in that** the cover material is added by injection moulding into a chamber-like recess (3) in the outer surface of the container wall (1) and adheres to the container material, wherein the data carrier is arranged directly, that is to say without a housing or without laminated protective layers or films, on the base of the recess (3) and that the recess is completely filled by the cover material (7) and the recess is sealed by the cover material (7) so that the data carrier is permanently connected to the container, wherein the cover material (7) is then formed flush with the adjacent outer surface of the container wall (1) and is applied so as to cover the data carrier and that the data carrier is optically not visible in the container.

8. A container as claimed in Claim 7, **characterised in that** the data carrier is an RFID transponder in film form.

9. A container as claimed in one of Claims 7 or 8, **characterised in that** the cover material (7; 7') is the same material as the material of the container.

10. A container as claimed in one of Claims 7 to 9, **characterised in that** the cover material (7) terminates smoothly with a wall of the container.

11. A container as claimed in one of Claims 7 to 10, **characterised in that** the cover material (7; 7') is integrally moulded on the container by injection moulding with the aid of an injection tool (2').

12. A container as claimed in one of Claims 7 to 11, **characterised in that** the plastic material is an olefin.

13. A container as claimed in one of Claims 7 to 12, **characterised in that** the data carrier (5') is provided with at least one perforation (9) through which the cover material (7; 7') may penetrate.

## Revendications

1. Procédé de fabrication d'un conteneur réalisé par moulage par injection d'une masse de matière plastique, lequel conteneur comprend un support de données (5 ; 5') relié à une paroi (1) du conteneur, dans lequel on fabrique d'abord le conteneur par moulage par injection dans un moule à injection (2) puis, après avoir ouvert au moins en partie le moule à injection (2), on place le support de données (5 ; 5') à l'endroit (3) du conteneur prévu à cet effet, procédé dans lequel le conteneur est d'abord moulé avec un évidement en forme de niche (3) au niveau de la surface externe d'une paroi de conteneur (1) prévu pour loger le support de données (5 ; 5') ;
**caractérisé en ce que**
le support de données est placé et fixé directement, à savoir sans enveloppe ou sans couches ou films de protection stratifiés, sur le fond de l'évidement (3) ;
dans une deuxième étape de moulage par injection, l'évidement (3) est entièrement rempli d'une matière plastique de recouvrement adhérente sur le matériau du conteneur, de telle sorte que l'évidement (3) est refermé par la matière de recouvrement (7 ; 7') et le support de données (5 ; 5') est relié de manière durable au conteneur, la matière de recouvrement étant disposée en affleurement avec la surface externe adjacente de la paroi de conteneur (1) et elle recouvre le support de données, de sorte que le support de données n'est pas visible optiquement dans le conteneur.

2. Procédé selon la revendication 1, dans lequel le support de données (5 ; 5') est un transpondeur.

3. Procédé selon la revendication 2, dans lequel la matière de recouvrement est ajoutée au moyen d'un dispositif d'injection séparé (2'), dans lequel le conteneur est inséré ou qui est placé à côté du conteneur.

4. Procédé selon l'une quelconque des revendications précédentes, dans lequel on utilise un support de données (5') comprenant au moins une perforation (9) dans laquelle peut pénétrer par la matière de recouvrement (7 ; 7').

5. Procédé selon l'une quelconque des revendications précédentes, dans lequel, avant l'addition de la matière de recouvrement (7 ; 7'), le support de données (5 ; 5') est fixé provisoirement par collage sur la paroi (1) du conteneur.

6. Procédé selon l'une quelconque des revendications précédentes, dans lequel, avant l'addition de la matière de recouvrement (7 ; 7'), le support de données (5 ; 5') est positionné et/ou fixé provisoirement sur la paroi (1) du conteneur à l'aide de pièces moulées.

7. Conteneur de matière plastique fabriqué par moulage par injection comprenant un support de données, qui est disposé entre la matière du conteneur et une matière de recouvrement,
**caractérisé en ce que**
la matière de recouvrement est introduite par moulage par injection dans un évidement en forme de niche (3) au niveau de la surface externe de la paroi de conteneur (1) et elle adhère à la matière du conteneur, le support de données étant placé directement, à savoir sans enveloppe ou sans couches ou films de protection stratifiés, sur le fond de l'évidement (3), et **en ce que** l'évidement est entièrement rempli avec la matière de recouvrement (7) et l'évidement est refermé par la matière de recouvrement (7), de sorte que le support de données est relié de manière durable au conteneur, la matière de recouvrement (7) étant disposée en affleurement avec la surface externe adjacente de la paroi de conteneur (1) et de manière à recouvrir le support de données, et **en ce que** le support de données n'est pas visible optiquement dans le conteneur.

8. Conteneur selon la revendication 7,
**caractérisé en ce que**
le support de données est un transpondeur RFID sous forme de film.

9. Conteneur selon l'une quelconque des revendications 7 ou 8,
**caractérisé en ce que**
la matière de recouvrement (7 ; 7') est la même matière que la matière du conteneur.

10. Conteneur selon l'une quelconque des revendications 7 à 9,
**caractérisé en ce que**
la matière de recouvrement (7) est en affleurement lisse avec une paroi du conteneur.

11. Conteneur selon l'une quelconque des revendications 7 à 10,
**caractérisé en ce que**
la matière de recouvrement (7 ; 7') est moulée sur le conteneur par moulage par injection à l'aide d'un outil d'injection (2').

12. Conteneur selon l'une quelconque des revendications 7 à 11,
**caractérisé en ce que**
la matière plastique est une polyoléfine.

13. Conteneur selon l'une quelconque des revendications 7 à 12,
**caractérisé en ce que**
le support de données (5') est pourvu d'au moins une perforation (9) dans laquelle peut pénétrer la matière de recouvrement (7 ; 7').
